# EUROPÄISCHE PATENTSCHRIFT

(11) **EP 0 941 609 B1**
(45) Veröffentlichungstag und Bekanntmachung des Hinweises auf die Patenterteilung: **26.02.2003**
(21) Anmeldenummer: 97949929.0
(22) Anmeldetag: 14.11.1997
(51) Int. Cl.: H04N 7/14, H04N 7/15

(54) **VERFAHREN UND TELEKOMMUNIKATIONSSYSTEM ZUR UNTERSTÜTZUNG MULTIMEDIALER DIENSTE ÜBER EINE SCHNITTSTELLE SOWIE EIN ENTSPRECHEND AUSGESTATTETES TEILNEHMERENDGERÄT**
METHOD AND TELECOMMUNICATIONS SYSTEM FOR SUPPORTING MULTIMEDIA SERVICES VIA AN INTERFACE AND A CORRESPONDINGLY CONFIGURED SUBSCRIBER TERMINAL
PROCEDE ET SYSTEME DE TELECOMMUNICATION POUR LE SUPPORT DE SERVICES MULTIMEDIA PAR L'INTERMEDIAIRE D'UNE INTERFACE, ET TERMINAL D'ABONNE PRESENTANT UNE CONFIGURATION CORRESPONDANTE

(30) Priorität: 09.12.1996 DE 19651084
(43) Veröffentlichungstag der Anmeldung: 15.09.1999
(73) Patentinhaber: SIEMENS AKTIENGESELLSCHAFT, 80333 München (DE)
(72) Erfinder: HAFERBECK, Ralf, D-85716 Unterschleissheim (DE); ERNST, Detlef, D-81673 München (DE)
(86) Internationale Anmeldenummer: DE9702679
(87) Internationale Veröffentlichungsnummer: WO98026592

(56) Entgegenhaltungen:
- EP-A- 0 619 679
- TAK-SHING YUM ET AL: "VIDEO BANDWIDTH ALLOCATION FOR MULTIMEDIA TELECONFERENCES" IEEE TRANSACTIONS ON COMMUNICATIONS, Bd. 43, Nr. 2/04, PART 01, 1.Februar 1995, NEW YORK, NY, US, Seiten 457-465, XP000506555
- CARMINE A: "MULTIMEDIA OVER DECT: THE ENABLING TECHNOLOGY FOR MULTI -APPLICATIONDOMESTIC WIRELESS SYSTEMS" PHILIPS TELECOMMUNICATION REVIEW, Bd. 52, Nr. 4, 1.Oktober 1995, EINDHOVEN, NL, Seiten 9-11, XP000545036
- HORIGUCHI T ET AL: "PICSEND-C REALIZES LOW-COST SIMULTANEOUS CONFERENCING AT 5 LOCATIONS BY TV TELEPHONE" NTT REVIEW, Bd. 7, Nr. 5, September 1995, TOKYO, JP, Seiten 84-88, XP000536285

## Beschreibung

Die Erfindung betrifft ein Verfahren zur Unterstützung multimedialer Dienste über eine Funk-Schnittstelle zwischen einem Mobil-Telekommunikationssystem mit funktechnischen Sende-Empfangs-Einrichtungen und einem mobilen Endgerät mit funktechnischen Sende-Empfangs-Einrichtungen sowie ein entsprechendes Mobil-Telekommunikationssystem und ein entsprechendes mobiles Teilnehmerendgerät.

In der Telekommunikation besteht zunehmend das Bestreben, eine universelle persönliche Telekommunikation zu ermöglichen, was bedeutet, dass einem Teilnehmer eines Telekommunikationssystems möglichst überall seine Dienste zur Verfügung gestellt werden sollten. Daraus resultiert die Anforderung an Telekommunikationssysteme mit Funkschnittstelle oder mit leitungsgebundener Schnittstelle zu Teilnehmerendgeräten, so viele Dienste wie möglich mit angemessener Qualität - auch insbesondere für mobile Teilnehmer über die Luftschnittstelle - anzubieten. Mobil-Kommunikationssysteme beispielsweise weisen eine Funkschnittstelle zu/von Mobilstationen mobiler Funkteilnehmer auf, über die Signalisierungssignale und Nutzsignale übertragen werden. Dabei werden die Signale sendeseitig und empfangsseitig erzeugt und von Sende-Empfangs-Einrichtungen des Telekommunikationssystems bzw. der Mobilstationen ausgesendet. Für eine Unterstützung multimedialer Dienste, wie beispielsweise Videokonferenzen, besteht bei Telekommunikationssystemen mit Funkschnittstelle das Problem, dass die Funkschnittstelle hinsichtlich der Übertragungsbandbreite einen Flaschenhals darstellt. Somit müssen deren funktechnischen Ressourcen zur Signalübertragung über die Luft sehr sorgfältig und sparsam vergeben werden.

Darüber hinaus sind die Mobilstationen relativ klein und leicht, weshalb die Möglichkeiten zur Anzeige von Bildern gemäß einem multimedialen Dienst am mobilen Endgerät eingeschränkt sind. Daher werden derzeit multimediale Dienste allenfalls in Telekommunikationsnetzen mit leitungsgebundener Schnittstelle angeboten und von Telekommunikationssystemen mit Funkschnittstelle bislang nicht unterstützt. Dennoch gibt es bereits Überlegungen zu einem Prototyp eines multimedialen mobilen Endgeräts - siehe "Mobile multimedia by MAVT - A starting point of many applications", verteilt auf dem RACE Mobile Telecommunications Summit, Lissabon, 22. bis 24.11.1995 (Veröffentlichungsdatum auf der letzten Seite 08/95).

Aus der EP-0 619 679 A1 ist eine Anordnung sowie ein System für eine multi-lokale Telekonferenz mit mehreren Teilnehmern, die ausschließlich über drahtgebundene Endgeräte in einem leitungsgebundenen Telekommunikationssystem - z.B. ISDN-Netz - miteinander kommunizieren, bekannt. Dabei besteht der wesentliche Schritt der bekannten Telekonferenz darin, dass eine Sprechlokalisiereinheit die Sprachsignale mehrerer Teilnehmer an verschiedenen Orten detektiert und eine Bildverknüpfungseinheit die Bildsignale der sprechenden Teilnehmer zu einem resultierenden Bildsignal kombiniert. Dieses resultierende Bildsignal ermöglicht die gleichzeitige Anzeige von Bildern aller sprechenden Teilnehmer auf bestimmten Zonen des Bildschirms jedes in die Konferenz involvierten drahtgebundenen Endgeräts.

Aus dem Aufsatz "The enabling technology for multi-application domestic wireless systems", PTR Philips Telecommunications Review 52 (1995) October, No. 4, Seiten 9 bis 11 ist ein DECT-Schnurlossystems als Videokonferenzsystem für "Inhouse"-Anwendungen (domestic) bekannt. Das Schnurlossystem benutzt eine Luftschnittstelle zwischen einer Schnurlos-Basisstation und einem schnurlosen Endgerät, diese ist jedoch mit der Funk-Schnittstelle eines Mobilfunksystems bezüglich der Nutzung und Zuteilung der funktechnischen Ressourcen zur Signalübertragung nicht vergleichbar. Das schnurlose Haus-Videotelefonsystem hat eine begrenzte Reichweite, wobei die DECT-Basisstation über ein drahtgebundenes Videophone aus dem Festnetz Signale empfängt und über die Luftschnittstelle zu einem Fernsehbildschirm für die bildhafte Anzeige der Signale sendet. Dieses Konzept findet dort eine Verwendung - z.B. als Heim-Sicherheitssystem auf der Basis von DECT -, wo Videotelefone noch nicht verfügbar sind.

Es ist Aufgabe der Erfindung, ein Verfahren zur Unterstützung multimedialer Dienste über eine Funk-Schnittstelle sowie ein entsprechendes Mobil-Telekommunikationssystem und ein entsprechendes mobiles Teilnehmerendgerät anzugeben, durch das die Flexibilität hinsichtlich der Übertragungsbandbreite bei der Nutzung multimedialer Dienste bei akzeptabler Qualität verbessert werden kann. Insbesondere ist auch den mobilen Funkteilnehmern eines Mobilkommunikationssystems die Nutzung multimedialer Dienste über die hinsichtlich der Übertragungsbandbreite kritische Luftschnittstelle zu ermöglichen.

Diese Aufgabe wird gemäß der Erfindung durch die Merkmale des Patentanspruchs 1 hinsichtlich des Verfahrens, durch die Merkmale des Patentanspruchs 14 hinsichtlich des Mobil-Telekommunikationssystems und durch die Merkmale des Patentanspruchs 21 hinsichtlich des mobilen Teilnehmerendgeräts gelöst. Weiterbildungen der Erfindung sind in den Unteransprüchen angegeben.

Demnach werden beim erfindungsgemäßen Verfahren im Mobil-Telekommunikationssystem N logische Sprachkanäle, mit N>=2, zum Senden der Sprachsignale von N Teilnehmern und nur M, mit M< N) logische Bildkanäle, die zuvor ausgewählt werden, zum Senden der Bildsignale von M Teilnehmern verwendet. Vom mobilen Teilnehmerendgerät werden dem Teilnehmer die von den funktechnischen Sende-Empfangs-Einrichtungen empfangenen Sprachsignale der N Teilnehmer ausgegeben und die von den Sende-Empfangs-Einrichtungen empfangenen Bildsignale der M Teilnehmer angezeigt. Im einfachsten und in Bezug auf die Übertragungsbandbreite günstigsten Fall M=1 braucht somit lediglich ein logischer Bildkanal zur Übertragung der Bildsignale eines einzigen Teilnehmers ausgewählt und zusätzlich zu den N logischen Sprachkanälen zum Teilnehmer bzw. zu dessen Endgerät über die Schnittstelle geführt zu werden. Bei dem Anwendungsfall einer Videokonferenz wird am mobilen Teilnehmerendgerät beispielsweise nur das Bild von einem Teilnehmer angezeigt. Grundsätzlich ist auch die Auswahl mehrerer Bildkanäle (M>1) zur Übertragung der Bildsignale und Anzeige der Bilder mehrerer Teilnehmer des multimedialen Dienstes möglich. Durch die gezielte Auswahl eines Bildkanals oder mehrerer Bildkanäle aus einer Mehrzahl von Bildkanälen kann die auf der Funk-Schnittstelle zur Unterstützung der multimedialen Dienste erforderliche Übertragungsbandbreite flexibel gestaltet und an die vorhandene Übertragungskapazität der Schnittstelle angepasst werden. Dies wirkt sich besonders günstig auf die Unterstützung des multimedialen Dienstes über eine Funkschnittstelle zu/vom mobilen Teilnehmerendgerät eines Funkteilnehmers aus, von dem somit der multimediale Dienst trotz der beschränkten Funkressourcen genutzt werden kann.

Es hat sich als günstig erwiesen, im Mobil-Telekommunikationssystem automatisch den Bildkanal auszuwählen, der die Bildsignale des aktuell sprechenden Teilnehmers enthält. Alternativ zur automatischen Übertragung und Anzeige der Bildsignale des aktuell sprechenden Teilnehmers besteht in vorteilhafter Weise auch die Möglichkeit, einen Bildkanal zur Übertragung der Bildsignale eines bestimmten Teilnehmers oder eines bestimmten Bildausschnitts auszuwählen und die jeweiligen über die Funkschnittstelle empfangenen Bildsignale am mobilen Teilnehmerendgerät anzeigen zu lassen. Dazu erfolgt die Auswahl des Bildausschnitts oder desjenigen Teilnehmers, den der Teilnehmer gerade sehen möchte, über zumindestens eine vom Teilnehmer am mobilen Teilnehmerendgerät initiierte Benutzeraktion.

Zur Aktivierung der Benutzeraktion erfolgt vorzugsweise eine Betätigung einer oder mehrerer Tasten einer Eingabevorrichtung des mobilen Teilnehmerendgeräts oder einer menüartigen Bedienoberfläche des Teilnehmerendgeräts, um das Bild des gewünschten Teilnehmers im Bildkanal zu übertragen und am Teilnehmerendgerät anzuzeigen. Zur Auswahl des Bildausschnitts wird vom Teilnehmer vorzugsweise ein interaktives Eingabemittel des Teilnehmerendgeräts, beispielsweise eine Eingabesteuerung per Maus, benutzt.

Für den beispielhaften Anwendungsfall der Videokonferenz als multimedialen Dienst führt die gezielte Auswahl eines oder mehrerer Bildkanäle im Mobil-Telekommunikationssystem zu Übertragungskapazitätsgewinnen auf der Funk-Schnittstelle. Der Gewinn wächst mit zunehmender Anzahl der Teilnehmer an der Videokonferenz an und wirkt sich umso vorteilhafter in Bezug auf die Zuteilung funktechnischer Ressourcen aus.

Das Mobil-Telekommunikationssystem gemäß der Erfindung verfügt über Mittel zum Senden der bereitgestellten Sprachsignale von N Teilnehmern in N logischen Sprachkanälen, mit N>=2, sowie über Mittel zur Auswahl von M, mit M<N logischen Bildkanälen und über Mittel zum Senden der Bildsignale von M Teilnehmern in den M Bildkanälen. Dabei weist das Mobil-Telekommunikationssystem vorzugsweise eine Funktionseinrichtung mit einer Auswahlfunktionseinrichtung zur Behandlung der logischen Sprachkanäle und einer Bildkanalumschaltfunktionseinrichtung zur Bildkanalumschaltung auf. Dabei ist es günstig, wenn die Auswahlfunktionseinrichtung eine Nachricht zur Bildkanalumschaltfunktionseinrichtung sendet, mit der die Bildsignale des aktuell sprechenden Teilnehmers auf einen abgehenden logischen Bildkanal durchgeschaltet werden. Gemäß einer dazu alternativen Weiterbildung der Erfindung wird von der Auswahlfunktionseinrichtung oder der Bildkanalumschaltfunktionseinrichtung ein Signalisierungssignal empfangen, durch das die Bildsignale eines bestimmten Teilnehmers oder eines bestimmten Bildausschnitts auf einen abgehenden Bildkanal durchschaltbar sind.

Als besonders günstig hat sich erwiesen, wenn sich die Mittel zur Auswahl der Bildkanäle in einem funktechnischen Teilsystem oder in einem vermittlungstechnischen Teilsystem eines über eine Funkschnittstelle mit einem mobilen Teilnehmerendgerät eines Funkteilnehmers verbundenen Mobil-Telekommunikationssystems befinden. Als Vermittlungseinrichtung ist besonders eine Dienstesteuerungseinheit eines die Struktur eines Intelligenten Netzes unterstützenden Mobil-Telekommunikationssystems geeignet.

Das mobile Teilnehmerendgerät gemäß der Erfindung weist Mittel zur Ausgabe von jeweils durch das Mobil-Telekommunikationssystem bereitgestellten und in N logischen Sprachkanälen, mit N >=2, empfangenen Sprachsignalen von N Teilnehmern sowie Mittel zur Anzeige von jeweils durch das Mobil-Telekommunikationssystem bereitgestellten und in ausgewählen M, mit M<N logischen Bildkanälen übertragenen Bildsignalen von M Teilnehmern auf.

Als günstig hat sich erwiesen, das Gerät zur Aktivierung einer Benutzeraktion mit einer oder mehreren Tasten einer Eingabevorrichtung oder mit einer menüartigen Bedienoberfläche zur Auswahl eines Bildkanals, der im Mobil-Telekommunikationssystem für die Übertragung der Bildsignale eines bestimmten Teilnehmers vorgesehen ist, auszustatten. Alternativ dazu ist es ebenso günstig, zur Aktivierung einer Benutzeraktion das Teilnehmerendgerät mit einem interaktiven Eingabemittel zur Auswahl eines Bildkanals, der im Mobil-Telekommunikationssystem für die Übertragung der Bildsignale eines bestimmten Bildausschnitts vorgesehen ist, auszustatten.

Gemäß einer besonders günstigen Weiterbildung der Erfindung ist das Teilnehmerendgerät als mobiles Gerät zur Unterstützung multimedialer Dienste für einen Funkteilnehmer über die Funkschnittstelle mit den oben genannten Mitteln versehen.

Die Erfindung wird anhand von Ausführungsbeispielen näher erläutert, die in einer Zeichnung dargestellt sind. Im einzelnen zeigen
Figur 1 ein mobiles Teilnehmerendgerät zur Unterstützung eines multimedialen Dienstes am Beispiel einer Videokonferenz,
Figur 2 ein Telekommunikationssystem, das über eine Funkschnittstelle mit dem Teilnehmerendgerät verbunden ist,
Figur 3 in einer vereinfachten Darstellung eine im Telekommunikationssystem angeordnete Funktionseinrichtung zur Auswahl eines logischen Bildkanals für die Bildsignalübertragung über die Schnittstelle,
Figur 4 in einer vereinfachten Darstellung die Funktionseinrichtung gemäß Figur 3 zur Auswahl des logischen Bildkanals abhängig von einer über das Teilnehmerendgerät vorgenommenen Benutzeraktion und
Figur 5 in einer vereinfachten Darstellung die Funktionseinrichtung gemäß Figur 3 bei Hinzufügen bzw. Entfernen eines Teilnehmers des multimedialen Dienstes.

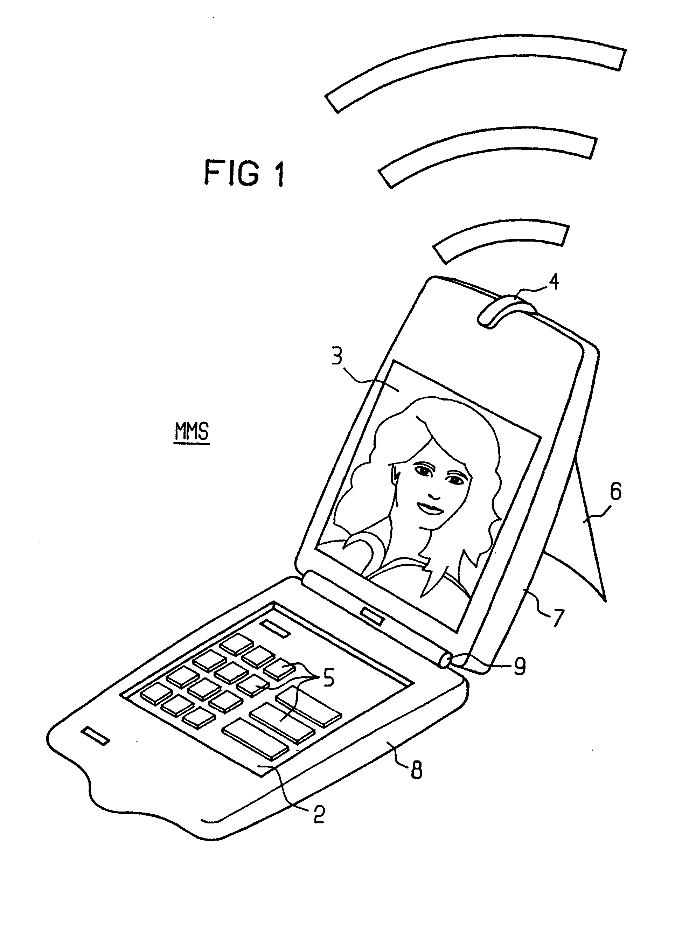

Figur 1 zeigt ein Teilnehmerendgerät zur Unterstützung eines multimedialen Dienstes über eine Schnittstelle zu/von einem Telekommunikationssystem. Der multimediale Dienst besteht im vorliegenden Beispiel aus einer Videokonferenz mit mehreren Teilnehmern des Telekommunikationssystems, von denen im vorliegenden Beispiel zumindestens ein Teilnehmer ein mobiler Teilnehmer ist, der über eine Funkschnittstelle mit dem Telekommunikationssystem kommunizieren kann. Der mobile Teilnehmer benutzt zur Videokonferenz mit den anderen Teilnehmern daher ein mobiles Teilnehmerendgerät MMS. Ebenso sind auch drahtgebundene Teilnehmerendgeräte zur Nutzung multimedialer Dienste für Teilnehmer, die über eine leitungsgebundene Schnittstelle an das Telekommunikationssystem angschlossen sind. Das Teilnehmerendgerät MMS weist ein Basiselement 8 und ein bewegliches Element 7 auf, das gegenüber dem Basiselement 8 nach oben aufklappbar ist. Zum Hochklappen sind das Basiselement 8 und das bewegliche Element 7 beispielsweise über ein Drehscharnier 9 miteinander beweglich verbunden. Das Basiselement 8 weist eine Eingabevorrichtung 2 mit Tasten 5 auf, über die der Teilnehmer eine Benutzeraktion aktivieren kann. Dabei umfassen die Tasten 5 Zifferntasten, die beispielsweise zum Telefonieren benutzt werden können, und Steuertasten, die beispielsweise für spezielle Benutzereingaben verwendet werden. Alternativ dazu kann auch anstelle der Eingabevorrichtung 2 mit Tasten 5 eine menüartige Bedienoberfläche oder ein interaktives Eingabemittel, beispielsweise in Form einer Maussteuerung, vom mobilen Teilnehmer zur Eingabe der Benutzeraktion betätigt werden. Das bewegliche Element 7 des Teilnehmerendgeräts weist einen Bildschirm 3 zur Anzeige eines Bildes auf, das von einem der anderen Teilnehmer der Videokonferenz nach Übertragung von entsprechenden Bildsignalen über die Schnittstelle dargestellt werden kann. Der Bildschirm 3 weist vorzugsweise eine gegenüber dem Anzeigefeld einer üblichen Mobilstation höhere Auflösung auf, um eine für den Benutzer des Teilnehmerendgeräts akzeptable Qualität bei der Bilddarstellung zu gewährleisten.

Die von dem Teilnehmerendgerät empfangenen Sprachsignale werden über einen in dem Basiselement 8 befindlichen Lautsprecher ausgegeben. Um das Bild des mobilen Teilnehmers den anderen Teilnehmern des Telekommunikationssystems anzeigen zu können, ist am oberen Ende des beweglichen Elements 7 eine Videokamera 4 zur Aufnahme eines Bildes des mobilen Teilnehmers angeordnet. In der Nähe der Videokamera 4 an der Oberseite des beweglichen Elements 7 sind nicht näher dargestellte Sende-Empfangs-Einrichtungen vorgesehen, die das Senden und Empfangen von Sprachsignalen und Bildsignalen über die Funkschnittstelle ermöglichen. Die Sprachsignale des mobilen Teilnehmers werden über ein Mikrofon aufgenommen, das sich beispielsweise im Basiselement 8 des Teilnehmerendgeräts 1 befindet. Ebenso ist es möglich, anstelle des einer Mobilstation ähnelnden mobilen Endgeräts MMS ein anderes tragbares Gerät, beispielsweise ein Notebook oder ein Laptop mit integrierten Sende-Empfangs-Einrichtungen zur Unterstützung der Funkschnittstelle, als ein vom mobilen Teilnehmer nutzbares mobiles Endgerät zu verwenden. Für den Fall, daß das Teilnehmerendgerät ein drahtgebundenes Gerät ist, verfügt es ebenso über Sende-Empfangs-Einrichtungen zur Unterstützung der Schnittstelle, über Anzeigemittel für die Bildsignale und Ausgabemittel für die Sprachsignale.

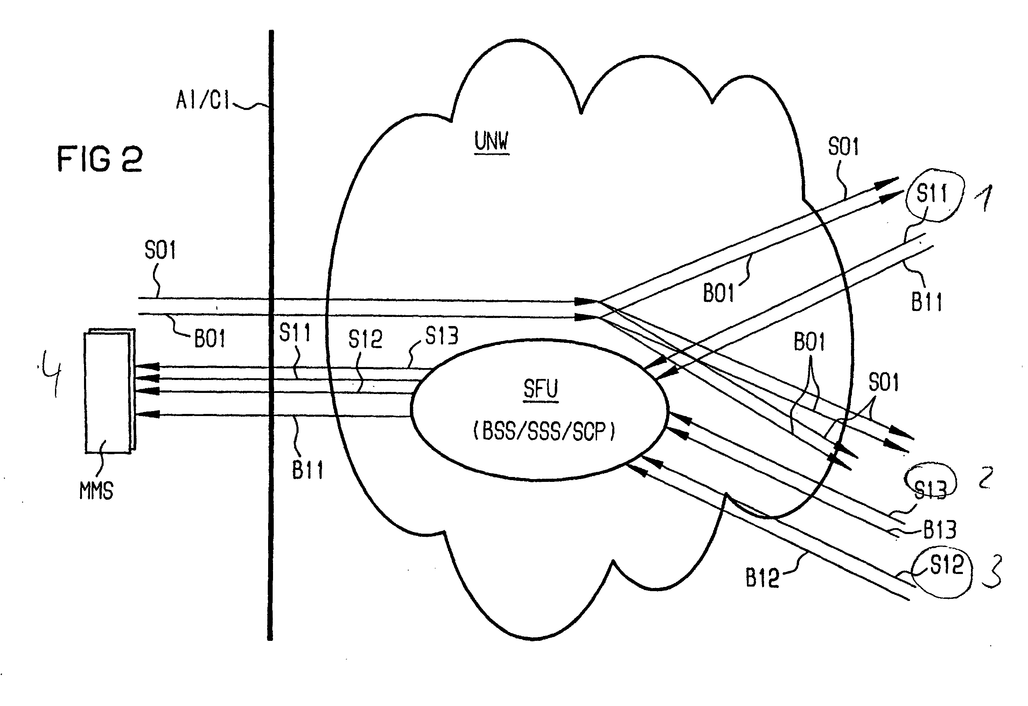

Figur 2 zeigt in einer vereinfachten Darstellung ein Telekommunikationssystem UNW, das über eine Funkschnittstelle AI oder eine leitungsgebundene Schnittstelle CI mit einem Teilnehmerendgerät, z.B. dem in Figur 1 dargestellten Teilnehmerendgerät MMS, verbunden ist. An der Videokonferenz sind neben zumindestens einem mobilen Teilnehmer auch andere Teilnehmer beteiligt, deren Bildsignale und Sprachsignale vom Telekommunikationssystem UNW oder von einem anderen an das Telekommunikationssystem UNW angeschlossenen Netz aufgenommen werden. Für das vorliegende Beispiel sei angenommen, dass das Telekommunikationssystem UNW aus einem universellen Mobil-Kommunikationssystem (Universal Mobile Telecommunication Network) mit zumindestems einem funktechnischen Teilsystem und einem vermittlungstechnischem Teilsystem besteht. Das Telekommunikationssystem UNW kann aber auch ein leitungsgebundenes Netz sein. Das Mobil-Kommunikationssystem weist beispielsweise Schnittstellen zu weiteren Netze wie dem öffentlichen Fernsprechnetz (PSTN) oder dem ISDN-Netz bzw. dem Breitband-ISDN-Netz oder einem anderen Mobil-Kommunikationssystem (PLMN) auf. Unabhängig davon, an welches Netz oder an welche Netze die anderen Teilnehmer der Videokonferenz angeschlossen sind, werden die Sprachsignale und Bildsignale der Teilnehmer entweder direkt im Telekommunikationssystem UNW bereitgestellt oder zum Telekommunikationssystem UNW übertragen.

Wegen der Unterstützung der Funkschnittstelle AI weist das Telekommunikationssystem UNW zumindestens ein funktechnisches Teilsystem BSS auf, das beispielsweise eine oder mehrere Basisstationen sowie zumindestens eine mit den Basisstationen verbundene Basisstationssteuerung umfasst. Die Basisstationssteuerungen sind jeweils mit dem vermittlungstechnischen Teilsystem SSS, d.h. mit einer oder mehreren Mobilvermittlungsstellen, verbunden, die die Vermittlungsfunktionen einschließlich der mobilfunkspezifischen Funktionen bei der Verbindungsbehandlung auf Grund bestimmter Dienste übernehmen. Die Sende-Empfangs-Einrichtungen des funktechnischen Teilsystems BSS unterstützen bekanntlich die Signalübertragung über die Funkschnittstelle AI in beiden Übertragungsrichtungen von und zu dem Teilnehmerendgerät MMS eines mobilen Funkteilnehmers. Handelt es sich bei dem Telekommunikationssystem UNW um ein leitungsgebundenes Netz, das die Struktur eines Intelligenten Netzes unterstützt, sind Dienstesteuerungseinheiten SCP (Service Control Points) und Dienstevermittlungseinheiten (Service Switching Points) vorgesehen.

Im vorliegenden Beispiel sei angenommen, dass insgesamt vier Teilnehmer einschließlich eines mobilen Teilnehmers mit dem Teilnehmerendgerät MMS an der Videokonferenz beteiligt sind. Von den drei übrigen Teilnehmern werden Sprachsignale und Bildsignale durch das Telekommunikationssystem UNW bereitgestellt und beispielsweise in logischen Sprachkanälen S11, S12 und S13 sowie in logischen Bildkanälen B11, B12 und B13 übertragen. Die logischen Sprachkanäle und Bildkanäle enthalten jeweils die für einen Teilnehmer des multimedialen Dienstes aufgenommenen Sprachsignale und Bildsignale. Die Erfindung ist dabei unabhängig von dem physikalischen Übertragungsmedium. Das Telekommunikationssystem UNW weist unabhängig von seiner Art eine Funktionseinrichtung SFU auf, von der die in den Sprachkanälen S11...S13 übertragenen Sprachsignale und die in den Bildkanälen B11...B13 übertragenen Bildsignale der N übrigen Teilnehmer (hier N=3) empfangen werden. Die Funktionseinrichtung SFU befindet sich beispielsweise im Telefonieprozessor einer Basisstationssteuerung des funktechnischen Teilsystems BSS oder einer Mobilvermittlungsstelle des vermittlungstechnischen Teilsystems SSS bei einem Mobilkommunikationssystem oder in einer Dienstesteuerungseinheit SCP bei einem leitungsgebundenen Netz oder in einer ATM-Vermittlung eines Festnetz, in dem die Informationen gemäß dem ATM-Verfahren (Asynchronous Transfer Mode) übertragen werden können.

Aus der Anzahl von N übrigen, logischen Bildkanälen wird von der Funktionseinrichtung SFU eine Anzahl von M logischen Bildkanälen, mit M<=N, ausgewählt, die anstelle der N logischen Bildkanäle über die Schnittstelle AI oder CI zum Teilnehmerendgerät MMS bzw. zum Teilnehmer der Videokonferenz geführt sind. Im vorliegenden Beispiel wählt die Funktionseinrichtung SFU aus den N=3 ankommenden Bildkanälen B11...B13 einen einzigen M=1 logischen Bildkanal B11 aus und schaltet ihn als abgehenden logischen Bildkanal an ihren Ausgang durch. Dies hat zur Folge, dass am Teilnehmerendgerät MMS nur die Bildsignale eines einzigen Teilnehmers über den ausgewählten logischen Bildkanal B11 empfangen und am Bildschirm angezeigt werden. Auf diese Weise ist die Übertragungskapazität bei der Nutzung des multimedialen Dienstes auf der Schnittstelle AI oder CI verringert worden, so dass eine möglichst sorgfältige, günstige und flexible Zuteilung der funktechnischen Ressourcen auf der Funkschnittstelle AI oder der Übertragungsressourcen auf der leitungsgebundenen Schnittstelle CI auch bei der Unterstützung multimedialer Dienste wie beispielweise von Videokonferenzen erzielt wird. Neben dem ausgewählten Bildkanal B11 schaltet die Funktionseinrichtung SFU die logischen Sprachkanäle S11, S12 und S13 an ihre Ausgänge durch, so dass die darin enthaltenen Sprachsignale der übrigen N=3 an der Videokonferenz beteiligten Teilnehmer über die Schnittstelle AI oder CI zum Teilnehmerendgerät MMS des Teilnehmers parallel zu den Bildsignalen des einen Teilnehmers gesendet werden.

Die Sprachsignale und die Bildsignale zumindestens eines Teilnehmers werden in der Übertragungsrichtung vom Teilnehmerendgerät MMS zum Telekommunikationssystem UNW über die Schnittstelle AI oder CI gesendet. Dabei enthält ein Bildkanal B01 die jeweiligen Bildsignale des - beispielsweise mobilen - Teilnehmers und ein logischer Sprachkanal S01 dessen Sprachsignale. Im Telekommunikationssystem UNW werden die eintreffenden Sprachsignale und Bildsignale des beispielsweise mobilen Teilnehmers an die anderen N=3 Teilnehmer der Videokonferenz im jeweiligen Bildkanal B01 und im jeweiligen Sprachkanal S01 parallel weitervermittelt. Am jeweiligen Ort der N=3 anderen Teilnehmer werden die eintreffenden Sprachsignale des mobilen Teilnehmers ausgegeben und die eintreffenden Bildsignale des mobilen Teilnehmers bildlich dargestellt. Der Vorteil des Vorhandenseins einer Funktionseinrichtung SFU im Telekommunikationssystem UNW besteht in einem Übertragungskapazitätsgewinn, insbesondere bei der Zuteilung der knappen funktechnischen Ressourcen auf der Funkschittstelle. Dies wird im vorliegenden Beispiel dadurch erreicht, dass anstelle von vier logischen Bildkanälen und vier logischen Sprachkanälen, die zum/vom Teilnehmerendgerät über die Schnittstelle geführt werden müssten, lediglich ein einziger logischer Bildkanal zusätzlich zu den drei logischen Sprachkanälen zum Teilnehmerendgerät vorgesehen ist. Im Falle von mehr als vier Teilnehmern an einer Videokonferenz werden auf der Schnittstelle, insbesondere der Funkschnittstelle AI, entsprechend höhere Kapazitätsgewinne gegenüber dem üblichen Verfahren erreicht.

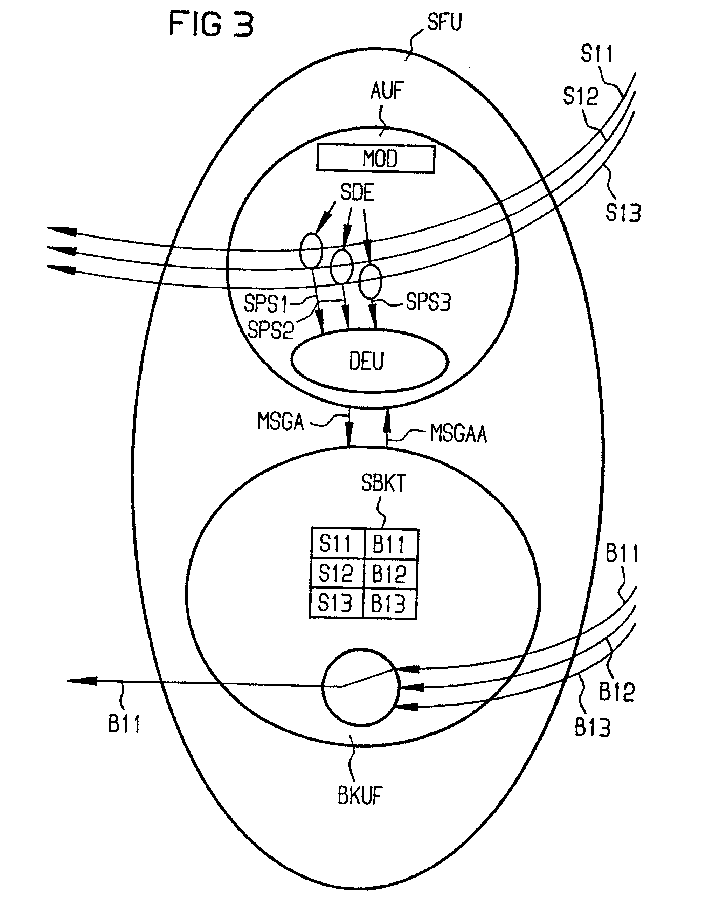

Figur 3 zeigt vereinfacht dargestellt die prinzipielle Struktur der im Telekommunikationssystem vorgesehenen Funktionseinrichtung SFU, die für die Auswahl der Bildübertragung verantwortlich ist. Die Funktionseinrichtung SFU realisiert eine Auswahlfunktion und eine Bildkanalumschaltfunktion, von denen die Auswahlfunktion in der Auswahlfunktionseinrichtung AUF alle logischen Sprachkanäle, im vorliegenden Beispiel die Sprachkanäle S11, S12 und S13, behandelt, während die Bildkanalumschaltfunktion in der Bildkanalumschaltfunktionseinrichtung BKUF alle logischen Bildkanäle, im vorliegenden Beispiel die Bildkanäle B11, B12 und B13, behandelt. Die Auswahlfunktionseinrichtung AUF umfasst mehrere Komponenten, von denen eine Komponente MOD einen aktuellen Arbeitsmodus angibt, bei dem entweder automatisch ein Bildkanal mit den Bildsignalen des aktuell sprechenden Teilnehmers oder mit den Bildsignalen eines bestimmten Teilnehmers oder mit den Bildsignalen eines Bildausschnitts von einem Gesamtbild der Videokonferenz ausgewählt wird. Eine weitere Komponente in der Auswahlfunktionseinrichtung AUF sind Sprachdetektoren SDE, die jedem der logischen Sprachkanäle S11...S13 zugeordnet sind und melden, ob der jeweilige logische Sprachkanal gerade aktiv ist oder nicht, d.h. ob eine Sprechaktivität auf dem logischen Sprachkanal registriert wird oder nicht. Eine letzte Komponente in der Auswahlfunktionseinrichtung AUF ist ein Entscheider DEU, der der Bildkanalumschaltfunktionseinrichtung BKUF eine Information über den momentan aktiven logischen Sprachkanal zur Verfügung stellt.

Im dargestellten Beispiel enthält die Bildkanalumschaltfunktionseinrichtung BKUF eine Zuordnungstabelle SBKT, in der die Einträge eine Zuordnung der logischen Sprachkanäle zu logischen Bildkanälen und umgekehrt enthalten. Dabei besteht ein erster Eintrag aus Informationen über den logischen Sprachkanal S11 und den zugehörigen logischen Bildkanal B11, ein zweiter Eintrag aus Informationen über den logischen Sprachkanal S12 und den zugehörigen logischen Bildkanal B12 sowie ein dritter Eintrag aus Informationen über den logischen Sprachkanal S13 und den zugehörigen logischen Bildkanal B13. Ebenso ist die Verwendung der Zuordnungstabelle SBKT in der Auswahlfunktionseinrichtung AUF möglich, die die Bildkanalumschaltfunktionseinrichtung BKUF über ihre Einträge entsprechend informiert.

Für den oben angegebenen ersten Fall, dass automatisch der Bildkanal auszuwählen ist, der die Bildsignale des aktuell sprechenden Teilnehmers enthält, überprüft jeder der Sprachdetektoren SDE den Zustand seines zugeordneten logischen Sprachkanals S11, S12, S13 und meldet dem Entscheider DEU, ob der jeweilige logische Sprachkanal gerade aktiv ist oder nicht. Ob eine Sprechaktivität auf den jeweiligen Sprachkanälen festzustellen ist, wird dem Entscheider DEU anhand von Informationen angezeigt, die in Steuersignalen SPS1, SPS2 und SPS3 von den jeweiligen Sprachdetektoren SDE empfangen werden. Aus den eintreffenden Informationen ermittelt der Entscheider DEU, ob eine Bildkanalumschaltung erforderlich ist oder nicht. So wird beispielsweise der Bildkanal, der die Bildsignale des aktuell sprechenden Teilnehmers überträgt, ausgewählt und über die Schnittstelle zum Teilnehmerendgerät geführt, um dessen Bild dem mobilen Teilnehmer anzuzeigen. Wenn mehrere der anderen Teilnehmer gleichzeitig sprechen, wird vorteilhafterweise die Bildübertragung nicht geändert, um zu häufiges Hin- und Herschalten zwischen verschiedenen Bildkanälen zu vermeiden.

Wird von den Sprachdetektoren SDE ein zuletzt aktiver Sprachkanal als inaktiv gekennzeichnet und ein anderer Sprachkanal als aktiv gemeldet, wird vom Entscheider DEU eine Bildkanalumschaltung initiiert. Zu diesem Zweck verwendet der Entscheider DEU eine Nachricht MSGA, in der eine Information über den neuen aktiven Sprachkanal zur Bildkanalumschaltfunktionseinrichtung BKUF gesendet wird. In der Gegenrichtung signalisiert die Bildkanalumschaltfunktionseinrichtung BKUF dem Entscheider DEU in einer Nachricht MSGAA, ob die gewünschte Bildkanalumschaltung erfolgreich ausgeführt werden konnte oder nicht. Die Bildkanalumschaltung wird dadurch realisiert, dass N ankommende logische Bildkanäle auf M (mit M<=N) ausgehende logische Bildkanäle durchgeschaltet werden. Da die Nachricht MSGA eine Information enthält, dass auf dem Sprachkanal S11 eine Sprechaktivität ermittelt wurde, wird im vorliegenden Beispiel von den ankommenden logischen Bildkanälen B11, B12 und B13 ein einziger logischer Bildkanal, z.B. B11, als Reaktion auf die eintreffende Nachricht MSGA durchgeschaltet. Anhand der Zuordnungstabelle SBKT wird auf Grund der eintreffenden Information des aktiven Sprachkanals S11 der im Eintrag zugehörige Bildkanal B11 für die Bildübertragung über die Funkschnittstelle ermittelt.

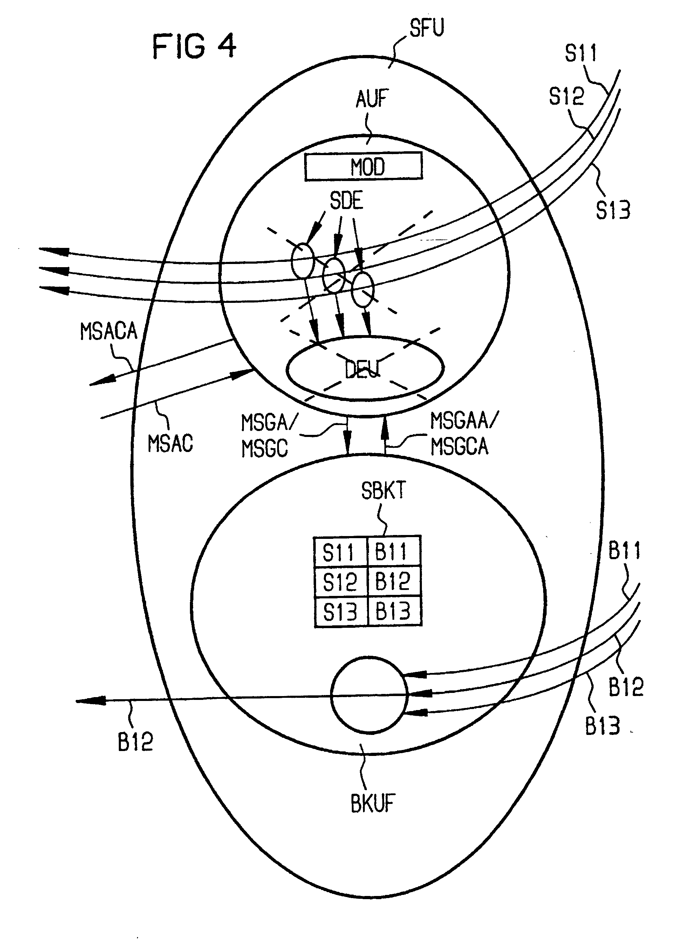

Figur 4 zeigt vereinfacht dargestellt die Funktionseinrichtung SFU, in der von der Auswahlfunktionseinrichtung AUF eine vom Teilnehmer am Teilnehmerendgerät initiierte Benutzeraktion zur Auswahl eines Bildkanals empfangen wird. Dies ist beispielsweise dann der Fall, wenn der Teilnehmer durch Betätigung der Steuertasten der Eingabevorrichtung oder durch eine Kombination spezieller Tasten bzw. durch Betätigung der menüartigen Bedienoberfläche des Teilnehmerendgeräts das Bild eines bestimmten Teilnehmers, den er aktuell angezeigt haben möchte, auswählt. Dabei wechselt die Komponente MOD der Auswahlfunktionseinrichtung AUF in einen Arbeitsmodus, der als benutzergesteuerter Modus erscheint. Dabei können sowohl die Sprachdetektoren SDE als auch der Entscheider DEU ausgeschaltet sein, was in Figur 4 an den durchgestrichenen Komponenten SDE und DEU erkennbar ist. Auf Grund der vom Teilnehmer vorgenommenen Benutzeraktion erzeugt das Teilnehmerendgerät ein Signalisierungssignal MSAC, das über die Schnittstelle zum Telekommunikationssystem übertragen und in der Funktionseinrichtung SFU von der Auswahlfunktionseinrichtung AUF empfangen wird. Die Auswahlfunktionseinrichtung AUF sendet daraufhin die Nachricht MSGA mit einer Information über den logischen Sprachkanal, in dem die Sprachsignale des gewünschten Teilnehmers enthalten sind, zur Bildkanalumschaltfunktionseinrichtung BKUF.

Durch Angabe des logischen Sprachkanals erhält die Bildkanalumschaltfunktionseinrichtung BKUF eine Information, welchen anderen Teilnehmer der Teilnehmer an seinem Teilnehmerendgerät gerade angezeigt haben möchte, indem die Zuordnungstabelle SBKT mit dem entsprechenden zugehörigen logischen Bildkanal für die Auswahl herangezogen wird. Dabei sei beispielsweise angenommen, dass der logische Bildkanal B12 mit den Bildsignalen des gewünschten Teilnehmers gemäß der Bildkanalumschaltfunktion durchgeschaltet und zusammen mit dem zugehörigen Sprachkanal S12 über die Funkschnittstelle zum - beispielsweise mobilen - Teilnehmer gesendet wird. Die Bildkanalumschaltfunktionseinrichtung BKUF sendet daraufhin die Nachricht MSGAA zur Auswahlfunktionseinrichtung AUF zurück, in der die gewünschte Bildkanalumschaltung als erfolgreich ausgeführt gekennzeichnet wird. Daraufhin teilt die Auswahlfunktionseinrichtung AUF durch das Signalisierungssignal MSACA, das über die Funkschnittstelle zum Teilnehmerendgerät rückgesendet wird, dem Teilnehmer mit, dass seine initiierte Benutzeraktion erfolgreich ausgeführt wurde. Für den Fall, dass eine Bildkanalumschaltung nicht ausgeführt werden konnte, kann die Nachricht MSGAA bzw. das Signalisierungssignal MSACA auch eine Fehlermeldung bzw. eine Information zur Kennzeichnung eines erfolglosen Versuchs der Bildkanalumschaltung enthalten.

Anhand des im Telekommunikationssystems eintreffenden Signalisierungssignals MSAC besteht auch die Möglichkeit, durch eine vom Teilnehmer initiierte Benutzeraktion einen Bildausschnitt des Gesamtbildes der Videokonferenz durch die Funktionseinrichtung SFU auswählen zu lassen. Ebenso wie im zuvor beschriebenen Fall erfolgt zunächst ein Arbeitsmoduswechsel durch Änderung der Komponente MOD in einen Betriebszustand, bei dem von der Auswahlfunktionseinrichtung AUF eine andere Nachricht MSGC der Bildkanalumschaltfunktionseinrichtung BKUF übermittelt wird. In der Nachricht MSGC ist eine Information über den Bildausschnitt enthalten. Die Bildkanalumschaltfunktionseinrichtung BKUF schaltet den gewünschten Bildkanal an ihren Ausgang durch und sendet eine Nachricht MSGCA zur Auswahlfunktionseinrichtung AUF zurück, in der angegeben ist, ob die gewünschte Bildkanalumschaltung erfolgreich ausgeführt werden konnte oder nicht. Mit dem Signalisierungssignal MSACA setzt die Auswahl der Funktionseinrichtung AUF den mobilen Teilnehmer davon in Kenntnis, dass seine gewünschte Benutzeraktion, d.h. die Auswahl eines bestimmten Bildausschnitts, erfolgreich ausgeführt werden konnte oder nicht.

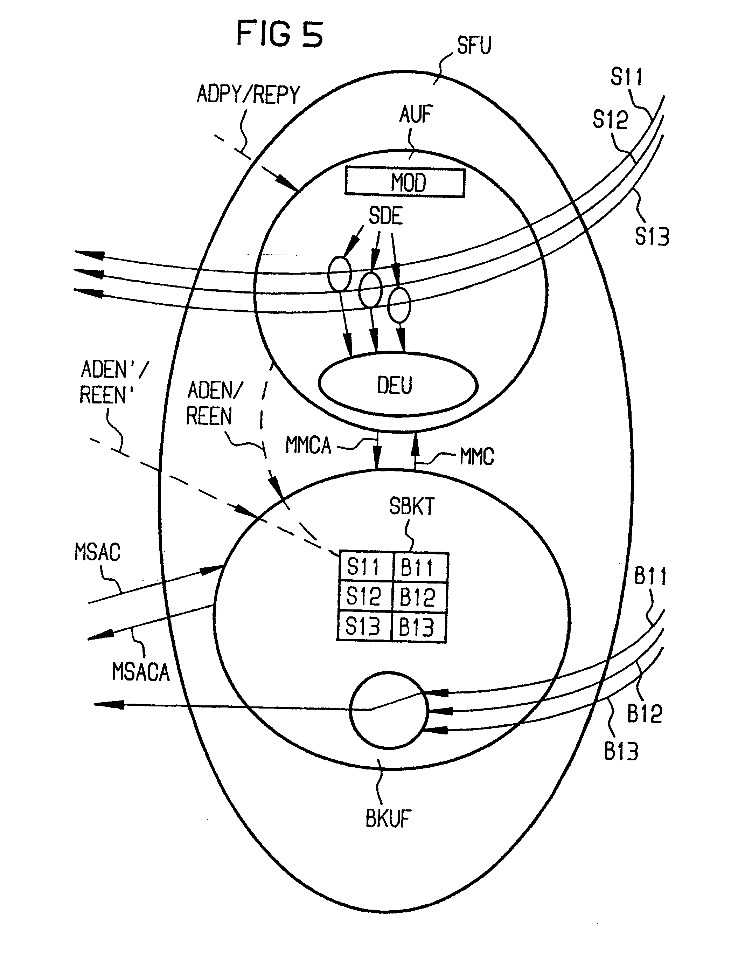

Figur 5 zeigt ebenfalls in vereinfachter Darstellung die Funktionseinrichtung SFU, in der auf Grund der vom mobilen Teilnehmer initiierten Benutzeraktion die Signalisierungssignale MSAC und MSACA über die Schnittstelle direkt von der Bildkanalumschaltfunktionseinrichtung BKUF empfangen bzw. rückgesendet werden. Soll dabei mit der Benutzeraktion ein Arbeitsmoduswechsel durchgeführt werden, wird von der Bildkanalumschaltfunktionseinrichtung BKUF eine Nachricht MMC zum Wechsel des Arbeitsmodus zur Auswahlfunktionseinrichtung AUF ausgesendet, die eine Nachricht MMCA zur Betätigung, ob der Arbeitsmoduswechsel erfolgreich ausgeführt wurde oder nicht, zurücksendet. Der Arbeitsmoduswechsel wird - wie bereits oben beschrieben - durch Änderung-der Komponente MOD gemäß der Auswahlfunktion erreicht. Auf alle anderen Benutzaktionen hin sendet die Bildkanalumschaltfunktionseinrichtung BKUF die für den neuen Bildausschnitt benötigten Bildsignale auf dem ausgewählten logischen Bildkanal durch, um über die Schnittstelle zum Teilnehmerendgerät bzw. zum Teilnehmer übertragen zu werden. In Bezug auf die durch eine oder mehrere Benutzeraktionen verursachte Signalisierung hat sich eine Vorgehensweise als besonders günstig erwiesen, bei der die Nachricht über einen Arbeitsmoduswechsel direkt an die Auswahlfunktionseinrichtung AUF gesendet wird, während die Nachrichten über alle anderen Benutzeraktionen direkt an die Bildkanalumschaltfunktionseinrichtung BKUF übermittelt werden.

Während einer Videokonferenz besteht darüber hinaus die Möglichkeit, neue Teilnehmer hinzuzuziehen bzw. bisherige Teilnehmer von der Videokonferenz wegzulassen. Dabei wird die Auswahlfunktion bzw. die Bildkanalumschaltfunktion in der Funktionseinrichtung SFU in die übliche Signalisierung, die zur Verbindungsbehandlung bei abgehenden und ankommenden Anrufen verwendet wird, eingebunden. Eine Nachricht ADPY zum Hinzufügen eines Teilnehmers bzw. eine Nachricht REPY zum Weglassen eines Teilnehmers wird von der Auswahlfunktionseinrichtung AUF empfangen, die daraufhin mittels der Nachricht ADEN bzw. REEN eine Aktualisierung der in der Bildkanalumschaltfunktionseinrichtung BKUF angeordneten Zuordnungstabelle SBKT bewirkt. Die Aktualisierung der Zuordnungstabelle SBKT besteht in einer Hinzunahme eines Eintrags, bestehend aus Informationen über den neuen Sprachkanal und den neuen Bildkanal, bzw. aus dem Löschen eines bestehenden Eintrags aus Informationen über einen bisherigen Sprachkanal und den entsprechenden Bildkanal. Die in der Funktionseinrichtung SFU ankommenden bzw. abgehenden Sprachkanäle und Bildkanäle werden beim Verbindungsaufbau bzw. Verbindungsabbau entsprechend aktualisiert. Alternativ dazu können Nachrichten ADEN' bzw. REEN' zum Hinzufügen eines Teilnehmers bzw. Löschen eines Teilnehmers direkt zur Bildkanalumschaltfunktionseinrichtung BKUF gesendet werden, die daraufhin ihre Zuordnungstabelle SBKT entsprechend anpasst. Die in der Funktionseinrichtung SFU ankommenden bzw. abgehenden Sprachkanäle und Bildkanäle werden ebenfalls beim Verbindungsaufbau bzw. Verbindungsabbau entsprechend aktualisiert.

## Patentansprüche

1. Verfahren zur Unterstützung multimedialer Dienste über eine Funkschnittstelle (AI) zwischen einem Mobil-Telekommunikationssystem (UNW) mit funktechnischen Sende-Empfangseinrichtungen und einem mobilen Teilnehmerendgerät (MMS) mit funktechnischen Sende-Empfangseinrichtungen, bei dem
- Sprachsignale und Bildsignale von einem mobilen Teilnehmer (7,8)und N übrigen Teilnehmern des multimedialen Dienstes sendeseitig und empfangsseitig bereitgestellt und über die Schnittstelle (AI) von den jeweiligen Sende-Empfangs-Einrichtungen ausgesendet werden,
- im Mobil-Telekommunikationssystem (UNW) N, mit N>=2, logische Sprachkanäle (z.B. S11, S12, S13) zum Senden der vom Mobil-Telekommunikationssystem bereitgestellten Sprachsignale der N übrigen Teilnehmer und M, mit M<N, logische Bildkanäle (z.B. B11), die im Mobil-Telekommunikationssystem ausgewählt werden, zum Senden der Bildsignale von M Teilnehmern zum mobilen Teilnehmer verwendet werden, und bei dem
- vom mobilen Teilnehmerendgerät (MMS) des mobilen Teilnehmers die von den Sende-Empfangs-Einrichtungen empfangenen Sprachsignale der N übrigen Teilnehmer ausgegeben und die von den Sende-Empfangs-Einrichtungen empfangenen Bildsignale der M Teilnehmer angezeigt werden.

2. Verfahren nach Anspruch 1,
**dadurch gekennzeichnet,**
**dass** im Mobil-Telekommunikationssystem (UNW) automatisch der Bildkanal (z.B. B11) ausgewählt wird, der Bildsignale des aktuell sprechenden Teilnehmers enthält.

3. Verfahren nach Anspruch 2,
**dadurch gekennzeichnet,**
**dass** bei gleichzeitigem Sprechen anderer Teilnehmer der automatisch ausgewählte Bildkanal (z.B. B11) beibehalten wird.

4. Verfahren nach Anspruch 2 oder 3,
**dadurch gekennzeichnet,**
**dass** zur Ermittlung des aktuell sprechenden Teilnehmers Sprachdetektoren (SDE) den N logischen Sprachkanälen (z.B. S11, S12, S13) zugeordnet werden, die jeweils den Zustand eines Sprachkanals überprüfen, ob dieser bei Sprechaktivität gerade aktiv ist oder bei Sprechpausen nicht aktiv ist.

5. Verfahren nach Anspruch 4,
**dadurch gekennzeichnet,**
**dass** Informationen (z.B. SPS1, SPS2, SPS3) über den Zustand der Sprachkanäle von den Sprachdetektoren (SDE) zur Verfügung gestellt und an einen Entscheider (DEU) gesendet werden, der eine Nachricht (MSGA) zur Bildkanalumschaltung abhängig von den empfangenen Informationen erzeugt.

6. Verfahren nach Anspruch 5,
**dadurch gekennzeichnet,**
**dass**, wenn dem Entscheider (DEU) ein zuletzt aktiver Sprachkanal als inaktiv und ein anderer Sprachkanal als aktiv gemeldet wird, die Nachricht (MSGA) zur Bildkanalumschaltung mit einer Information über den neuen Sprachkanal vom Entscheider erzeugt wird.

7. Verfahren nach Anspruch 1,
**dadurch gekennzeichnet,**
**dass** durch zumindestens eine vom Teilnehmer am mobilen Teilnehmerendgerät (MMS) vorgenommene Benutzeraktion dem Mobil-Telekommunikationssystem (UNW) signalisiert wird, einen Bildkanal (z.B. B12) zur Übertragung der Bildsignale eines bestimmten Teilnehmers oder eines bestimmten Bildausschnitts auszuwählen, und dass die über die Schnittstelle (AI) empfangenen Bildsignale des bestimmten Teilnehmers oder des bestimmten Bildausschnitts am mobilen Teilnehmerendgerät (MMS) angezeigt werden.

8. Verfahren nach Anspruch 7,
**dadurch gekennzeichnet,**
**dass** zum Initiieren der Benutzeraktion eine oder mehrere Tasten (5) einer Eingabevorrichtung (2) des mobilen Teilnehmerendgeräts (MMS) oder eine menüartige Bedienoberfläche des mobilen Teilnehmerendgeräts (MMS) vom Teilnehmer betätigt werden.

9. Verfahren nach Anspruch 7,
**dadurch gekennzeichnet,**
**dass** zum Initiieren der Benutzeraktion ein interaktives Eingabemittel des mobilen Teilnehmerendgeräts (MMS) vom Teilnehmer für die Auswahl des Bildausschnitts benutzt wird.

10. Verfahren nach einem der vorhergehenden Ansprüche,
**dadurch gekennzeichnet,**
**dass** im Mobil-Telekommunikationssytem (UNW) eine Auswahlfunktion zur Behandlung der logischen Sprachkanäle (z.B. S11, S12, S13) und zur Kennzeichnung zumindestens zweier Betriebsmodi, die sich auf die Auswahl der Bildkanäle (z.B. B11, B12) mit entweder Bildsignalen des aktuell sprechenden Teilnehmers oder eines bestimmten Teilnehmers oder eines bestimmten Bildausschnitts beziehen, durchgeführt wird.

11. Verfahren nach einem der vorhergehenden Ansprüche,
**dadurch gekennzeichnet,**
**dass** im Mobil-Telekommunikationssytem (UNW) eine Bildkanalumschaltfunktion zur Durchschaltung jeweils eines von mehreren, im Telekommunikationssytem ankommenden Bildkanälen (z.B. B11, B12, B13) auf einen abgehenden Bildkanal (z.B. B11) verwendet wird.

12. Verfahren nach Anspruch 10 oder 11,
**dadurch gekennzeichnet,**
**dass** die Auswahlfunktion oder die Bildkanalumschaltfunktion unter Verwendung einer Zuordnungstabelle (SBKT), in der die logischen Sprachkanäle (z.B. S11, S12, S13) den logischen Bildkanälen (z.B. B11, B12, B13) zugeordnet sind, durchgeführt wird..

13. Verfahren nach Anspruch 12,
**dadurch gekennzeichnet,**
**dass**, wenn bei der Anrufbehandlung des multimedialen Dienstes im Mobil-Telekommunikationssystem (UNW) signalisiert wird, dass ein neuer Teilnehmer hinzugefügt oder ein bisheriger Teilnehmer weggelassen wird, die Zuordnungstabelle (SBKT) durch Hinzufügen eines neuen Eintrags oder durch Löschen des bisherigen Eintrags angepasst wird.

14. Mobil-Telekommunikationssystem (UNW) mit funktechnischen Sende-Empfangs-Einrichtungen zur Unterstützung multimedialer Dienste über eine Funk-Schnittstelle (AI) von/zu einem mobilen Teilnehmerendgerät (MMS) mit funktechnischen Sende-Empfangs-Einrichtungen, mit
- Mitteln zum Bereitstellen von Sprachsignalen und Bildsignalen von einem mobilen Teilnehmer (7,8) und N übrigen Teilnehmern des multimedialen Dienstes, wobei die Sprach- und Bildsignale letzterer über die Funk-Schnittstelle (AI) von den Sende-Empfangs-Einrichtungen ausgesendet werden, und mit
- Mitteln zum Senden der bereitgestellten Sprachsignale der N übrigen Teilnehmer, mit N>=2, in N logischen Sprachkanälen (z.B. S11, S12, S13) und Mitteln (SFU) zur Auswahl von M, mit M<N, logischen Bildkanälen (z.B. B11) sowie Mitteln zum Senden der Bildsignale von M Teilnehmern in den M Bildkanälen (z.B. B11).

15. Mobil-Telekommunikationssystem nach Anspruch 14,
**dadurch gekennzeichnet,**
**dass** zur Auswahl der Bildkanäle eine Funktionseinrichtung (SFU) mit einer Auswahlfunktionseinrichtung (AUF) zur Behandlung der logischen Sprachkanäle (z.B. S11, S12, S13) und mit einer Bildkanalumschaltfunktionseinrichtung (BKUF) zur Bildkanalumschaltung vorgesehen ist.

16. Mobil-Telekommunikationssystem nach Anspruch 15,
**dadurch gekennzeichnet,**
**dass** die Auswahlfunktionseinrichtung (AUF) eine Nachricht (MSGA) zur Bildkanalumschaltfunktionseinrichtung (BKUF) sendet, mit der die Bildsignale des aktuell sprechenden Teilnehmers auf einen abgehenden logischen Bildkanal (z.B. B11) durchschaltbar sind

17. Mobil-Telekommunikationssystem nach Anspruch 14 oder 15,
**dadurch gekennzeichnet,**
**dass** auf Grund zumindestens einer vom Teilnehmer am mobilen Teilnehmerendgerät (MMS) vorgenommenen Benutzeraktion die Auswahlfunktionseinrichtung (AUF) oder die Bildkanalumschaltfunktionseinrichtung (BKUF) ein Signalisierungssignal (MSAC) empfangen, durch das die Bildsignale eines bestimmten Teilnehmers oder eines bestimmten Bildausschnitts auf einen abgehenden Bildkanal (z.B. B12) durchschaltbar sind.

18. Mobil-Telekommunikationssystem nach einem der Ansprüche 14 bis 17, **dadurch gekennzeichnet,**
**dass** die Mittel zur Auswahl der Bildkanäle (z.B. B11) in einem funktechnischen Teilsystem (BSS) eines Mobil-Telekommunikationssystems angeordnet sind, das über die Funkschnittstelle (AI) mit dem mobilen Teilnehmerendgerät (MMS) eines Funkteilnehmers verbunden ist.

19. Mobil-Telekommunikationssystem nach einem der Ansprüche 14 bis 17, **dadurch gekennzeichnet,**
**dass** die Mittel zur Auswahl der Bildkanäle in einem vermittlungstechnischen Teilsystem (SSS) eines Mobil-Telekommunikationssystems angeordnet sind, das über die Funkschnittstelle (AI) mit dem mobilen Teilnehmerendgerät (MMS) eines Funkteilnehmers verbunden ist.

20. Mobil-Telekommunikationssystem nach Anspruch 19,
**dadurch gekennzeichnet,**
**dass** die Vermittlungseinrichtung als Dienstesteuerungseinheit (SCP) eines die Struktur eines Intelligenten Netzes unterstützenden Mobil-Telekommunikationssystems ausgebildet ist.

21. Mobiles Teilnehmer endgerät (MMS) mit funktechnischen Sende-Empfangs-Einrichtungen zur Unterstützung multimedialer Dienste über eine Funk-Schnittstelle (AI) von/zu einem Mobil-Telekommunikationssystem (UNW) mit funktechnischen Sende-Empfangs-Einrichtungen, mit
- Mitteln(4) zum Bereitstellen von Sprachsignalen und Bildsignalen von einem mobilen Teilnehmer des multimedialen Dienstes, die über die Funk-Schnittstelle (AI) von den Sende-Empfangs-Einrichtungen ausgesendet werden, und mit
- Mitteln (8) zur Ausgabe von durch das Mobil-Telekommunikationssystem (UNW) bereitgestellten und in N, mit N>=2, logischen Sprachkanälen empfangenen Sprachsignalen von N übrigen Teilnehmern und Mitteln (3) zur Anzeige von durch das Mobil-Telekommunikationssystem bereitgestellten und in ausgewählten M, mit M<N, logischen Bildkanälen übertragenen Bildsignalen von M Teilnehmern.

22. Mobiles Teilnehmerendgerät nach Anspruch 21,
**dadurch gekennzeichnet,**
**dass** das Gerät (MMS) zur Aktivierung einer Benutzeraktion eine oder mehrere Tasten (5) einer Eingabevorrichtung (2) oder eine menüartige Bedienoberfläche für die Auswahl eines Bildkanals, der im Mobil-Telekommunikationssystem für die Übertragung der Bildsignale eines bestimmten Teilnehmers vorgesehen ist, aufweist.

23. Mobiles Teilnehmerendgerät nach Anspruch 21,
**dadurch gekennzeichnet,**
**dass** das Gerät (MMS) zur Aktivierung einer Benutzeraktion ein interaktives Eingabemittel zur Auswahl eines Bildkanals, der im Mobil-Telekommunikationssystem für die Übertragung der Bildsignale eines bestimmten Bildausschnitts vorgesehen ist, aufweist.

## Claims

1. Method for supporting multimedia services via a radio interface (AI) between a mobile telecommunications system (UNW) with radio transmitting/receiving devices and a mobile subscriber terminal (MMS) with radio transmitting/receiving devices, in which
- speech signals and picture signals from a mobile subscriber (7, 8) and from N other subscribers to the multimedia service are produced at the transmitting end and at the receiving end, and are transmitted by the respective transmitting/receiving devices via the interface (AI),
- in the mobile telecommunications system (UNW), N, where N>=2, logic speech channels (for example S11, S12, S13) are used for transmitting the speech signals of the N other subscribers, as produced by the mobile telecommunications system, and M, where M<N, logic picture channels (for example B11), which are selected in the mobile telecommunications system, are used for transmitting the picture signals from M subscribers to the mobile subscriber, and in which
- the speech signals which are received by the transmitting/receiving devices of the N other subscribers are output by the mobile subscriber terminal (MMS) of the mobile subscriber, and the picture signals which are received by the transmitting/receiving devices of the M subscribers, are displayed.

2. Method according to Claim 1,
**characterized**
**in that** the picture channel (for example B11) which contains picture signals relating to the currently speaking subscriber is selected automatically in the mobile telecommunications system (UNW).

3. Method according to Claim 2,
**characterized**
**in that**, if other subscribers speak at the same time, the automatically selected picture channel (for example B11) is maintained.

4. Method according to Claim 2 or 3,
**characterized**
**in that**, in order to determine the currently speaking subscriber, speech detectors (SDE) are allocated to the N logic speech channels (for example S11, S12, S13) and each check the status of one speech channel in order to determine whether this speech channel is currently active during speech activity, or is inactive during speech pauses.

5. Method according to Claim 4,
**characterized**
**in that** information (for example SPS1, SPS2, SPS3) relating to the status of the speech channels is provided by the speech detectors (SDE) and is sent to a decision maker (DEU), which produces a message (MSGA) for picture channel switching as a function of the received information.

6. Method according to Claim 5,
**characterized**
**in that** when a most recently active speech channel is signalled as being inactive and another speech channel is signalled as being active to the decision maker (DEU), the message (MSGA) for picture channel switching is produced by the decision maker by means of information about the new speech channel.

7. Method according to Claim 1,
**characterized**
**in that** at least one user action, which is carried out by the subscriber on the mobile subscriber terminal (MMS), is used to signal to the mobile telecommunications system (UNW) to select a picture channel (for example B12) for transmission of the picture signals of a specific subscriber or of a specific picture section, and in that the picture signals which are received via the interface (AI) from the specific subscriber or the specific picture section are or is displayed on the mobile subscriber terminal (MMS).

8. Method according to Claim 7,
**characterized**
**in that**, in order to initiate the user action, one or more keys (5) are operated by the subscriber on an input apparatus (2) of the mobile subscriber terminal (MMS), or a menu-like operator interface of the mobile subscriber terminal (MMS) is operated by said subscriber.

9. Method according to Claim 7,
**characterized**
**in that**, in order to initiate the user action, an interactive input means of the mobile subscriber terminal (MMS) is used by the subscriber for selection of the picture section.

10. Method according to one of the preceding claims,
**characterized**
**in that** a section function is carried out in the mobile telecommunications system (UNW) for handling the logic speech channels (for example S11, S12, S13) and for identifying at least two operating modes, which relate to the selection of the picture channels (for example B11, B12) with either picture signals of the currently speaking subscriber or of a specific subscriber, or of a specific picture section.

11. Method according to one of the preceding claims,
**characterized**
**in that** a picture channel switching function is used in the mobile telecommunications system (UNW) for switching through in each case one of a number of picture channels (for example B11, B12, B13), which arrive in the telecommunications system, to an outgoing picture channel (for example B11).

12. Method according to Claim 10 or 11,
**characterized**
**in that** the selection function or the picture channel switching function is carried out using an allocation table (SBKT), in which the logic speech channels (for example S11, S12, S13) are allocated to the logic picture channels (for example B11, B12, B13).

13. Method according to Claim 12,
**characterized**
**in that** when, during call handling for the multimedia service in the mobile telecommunications system (UNW), it is signalled that a new subscriber has been added or a previous subscriber has been omitted, the allocation table (SBKT) is adapted by addition of a new entry or by deletion of the previous entry.

14. Mobile telecommunications system (UNW) having radio transmitting/receiving devices for supporting multimedia services via a radio interface (AI) from/to a mobile subscriber terminal (MMS) having radio transmitting/receiving devices, having
- means for producing speech signals and picture signals from a mobile subscriber (7, 8) and from N other subscribers of the multimedia service, with the speech and picture signals of the latter being transmitted via the radio interface (AI) by the transmitting/receiving devices, and having
- means for transmitting the speech signals which are produced by the N other subscribers, where N>=2, in N logic speech channels (for example S11, S12, S13), and having means (SFU) for selecting M, where M<N, logic picture channels (for example B11), as well as means for transmitting the picture signals from M subscribers in the M picture channels (for example B11).

15. Mobile telecommunications system according to Claim 14,
**characterized**
**in that** a function device (SFU) is provided for selection of the picture channels, having a selection function device (AUF) for handling the logic speech channels (for example S11, S12, S13), and having a picture channel switching function device (BKUF) for picture channel switching.

16. Mobile telecommunications system according to Claim 15,
**characterized**
**in that** the selection function device (AUF) transmits a message (MSGA) to the picture channel switching function device (BKUF), by means of which the picture signals of the currently speaking subscriber can be switched through to an outgoing logic picture channel (for example B11).

17. Mobile telecommunications system according to Claim 14 or 15,
**characterized**
**in that**, on the basis of at least one user action which is carried out by the subscriber on the mobile subscriber terminal (MMS), the selection function device (AUF) or the picture channel switching function device (BKUF) receives a signalling signal (MSAC), by means of which the picture channels of a specific subscriber or of a specific picture section can be switched through to an outgoing picture channel (for example B12).

18. Mobile telecommunications system according to one of Claims 14 to 17,
**characterized**
**in that** the means for selecting the picture channels (for example B11) are arranged in a radio subsystem (BSS) of a mobile telecommunications system, which is connected via the radio interface (AI) to the mobile subscriber terminal (MMS) of a radio subscriber.

19. Mobile telecommunications system according to one of Claims 14 to 17,
**characterized**
**in that** the means for selecting the picture channels are arranged in a switching subsystem (SSS) of a mobile telecommunications system, which is connected via the radio interface (AI) to the mobile subscriber terminal (MMS) of a radio subscriber.

20. Mobile telecommunications system according to Claim 19,
**characterized**
**in that** the switching device is in the form of a service control unit (SCP) of a mobile telecommunications system which supports the structure of an intelligent network.

21. Mobile subscriber terminal (MMS) having radio. transmitting/receiving devices for supporting multimedia services via a radio interface (AI) from/to a mobile telecommunications system (UNW) having radio transmitting/receiving devices, having
- means (4) for producing speech signals and picture signals from a mobile subscriber of the multimedia service, which are transmitted via the radio interface (AI) by the transmitting/receiving device, and having
- means (8) for outputting speech signals, which are produced by the mobile telecommunications system (UNW) and are received in N, where N>=2, logic speech channels, from N other subscribers, and having means (3) for displaying picture signals from M subscribers, which picture signals are produced by the mobile telecommunications system and are transmitted in M, where M<N, selected logic picture channels.

22. Mobile subscriber terminal according to Claim 21,
**characterized**
**in that** the device (MMS) for activating a user action has one or more keys (5) on an input apparatus (2) or has a menu-like operator interface for selecting a picture channel, which is provided in the mobile telecommunications system for the transmission of the picture signals from a specific subscriber.

23. Mobile subscriber terminal according to Claim 21,
**characterized**
**in that** the device (MMS) for activating a user action has an interactive input means for selecting a picture channel, which is provided in the mobile telecommunications system for transmitting the picture signals of a specific picture section.

## Revendications

1. Procédé pour le support de services multimédia par l'intermédiaire d'une interface radio (Al) entre un système de télécommunication mobile (UNW) doté de dispositifs d'émission/réception radiotechniques et un terminal d'abonné mobile (MMS) doté de dispositifs d'émission/réception radiotechniques, dans lequel
- des signaux de parole et des signaux d'image sont mis à disposition par un abonné mobile (7, 8) et N autres abonnés du service multimédia à l'émission et à la réception et émis par l'intermédiaire de l'interface (Al) par les dispositifs d'émission/réception respectifs,
- on utilise dans le système de télécommunication mobile (UNW) N, avec N>=2, canaux de parole logiques (p.ex. S11, S12, S13) pour envoyer les signaux de parole mis à disposition par le système de télécommunication mobile des N autres abonnés et M, avec M<N, canaux d'image logiques (p.ex. B11) sélectionnés dans le système de télécommunication mobile pour envoyer les signaux d'image depuis M abonnés vers l'abonné mobile, et dans lequel
- les signaux de parole reçus par les dispositifs d'émission/réception des N autres abonnés sont délivrés par le terminal d'abonné mobile (MMS) de l'abonné mobile et les signaux d'image reçus par les dispositifs d'émission/réception des M abonnés sont affichés.

2. Procédé selon la revendication 1, **caractérisé en ce qu'**il est sélectionné automatiquement dans le système de télécommunication mobile (UNW) le canal d'image (p.ex. B11) qui contient des signaux d'image de l'abonné actuellement en cours de conversation.

3. Procédé selon la revendication 2, **caractérisé en ce qu'**en cas de conversation simultanée d'autres abonnés, le canal d'image sélectionné automatiquement (p.ex. B11) est conservé.

4. Procédé selon la revendication 2 ou 3, **caractérisé en ce que** pour déterminer l'abonné actuellement en cours de conversation, des détecteurs de parole (SDE) sont affectés aux N canaux de parole logiques (p.ex. S11, S12, S13), qui examinent chacun l'état d'un canal de parole afin de déterminer si celui-ci est actif en cas d'activité vocale ou inactif en cas de pause vocale.

5. Procédé selon la revendication 4, **caractérisé en ce que** des informations (p.ex. SPS1, SPS2, SPS3) concernant l'état des canaux de parole sont mises à disposition par les détecteurs de parole (SDE) et envoyées à un décideur (DEU), lequel génère un message (MSGA) de commutation de canal d'image en fonction des informations reçues.

6. Procédé selon la revendication 5, **caractérisé en ce que**, lorsque le décideur (DEU) se voit signaler un canal de parole dernièrement actif comme étant inactif et un autre canal de parole comme étant actif, le message (MSGA) de commutation de canal d'image est généré par le décideur par une information concernant le nouveau canal de parole.

7. Procédé selon la revendication 1, **caractérisé en ce que** par au moins une action utilisateur réalisée par l'abonné sur le terminal d'abonné mobile (MMS), il est signalé au système de télécommunication mobile (UNW) de sélectionner un canal d'image (p.ex. B12) pour transmettre les signaux d'image d'un abonné déterminé ou d'un extrait d'image déterminé et **en ce que** les signaux d'image reçus par l'intermédiaire de l'interface (Al) de l'abonné déterminé ou de l'extrait d'image déterminé sont affichés sur le terminal d'abonné mobile (MMS).

8. Procédé selon la revendication 7, **caractérisé en ce que** pour initier l'action utilisateur, une ou plusieurs touches (5) d'un dispositif d'entrée (2) du terminal d'abonné mobile (MMS) ou une interface de commande de type menu du terminal d'abonné mobile (MMS) sont actionnées par l'abonné.

9. Procédé selon la revendication 7, **caractérisé en ce que** pour initier l'action utilisateur, un moyen d'entrée interactif du terminal d'abonné mobile (MMS) est utilisé par l'abonné pour sélectionner l'extrait d'image.

10. Procédé selon l'une des revendications précédentes, **caractérisé en ce qu'**il est réalisé dans le système de télécommunication mobile (UNW) une fonction de sélection pour le traitement des canaux de parole logiques (p.ex. S11, S12, S13) et pour l'identification d'au moins deux modes de fonctionnement qui se rapportent à la sélection des canaux d'image (p.ex. B11, B12) à l'aide ou de signaux d'image de l'abonné actuellement en cours de conversation ou d'un abonné déterminé ou d'un extrait d'image déterminé.

11. Procédé selon l'une des revendications précédentes, **caractérisé en ce qu'**il est utilisé dans le système de télécommunication mobile (UNW) une fonction de commutation de canal d'image pour commuter respectivement un parmi plusieurs canaux d'image entrant dans le système de télécommunication (p.ex. B11, B12, B13) sur un canal d'image sortant (p.ex. B11).

12. Procédé selon la revendication 10 ou 11, **caractérisé en ce que** la fonction de sélection ou la fonction de commutation de canal d'image est réalisée à l'aide d'un tableau d'affectation (SBKT) dans lequel les canaux de parole logiques (p.ex. S11, S12, S13) sont affectés aux canaux d'image logiques (p.ex. B11, B12, B13).

13. Procédé selon la revendication 12, **caractérisé en ce que**, lorsqu'il est signalé lors du traitement d'appel du service multimédia dans le système de télécommunication mobile (UNW) qu'un nouvel abonné est ajouté ou un ancien abonné est supprimé, le tableau d'affectation (SBKT) est adapté en ajoutant une nouvelle entrée ou en supprimant l'ancienne entrée.

14. Système de télécommunication mobile (UNW) doté de dispositifs d'émission/réception radiotechniques pour le support de services multimédia par l'intermédiaire d'une interface radio (Al) depuis/vers un terminal d'abonné mobile (MMS) doté de dispositifs d'émission/réception radiotechniques, comprenant
- des moyens pour mettre à disposition des signaux de parole et des signaux d'image par un abonné mobile (7, 8) et N autres abonnés du service multimédia, les signaux de parole et d'image de ces derniers étant émis par l'intermédiaire de l'interface radio (Al) par les dispositifs d'émission/réception, et comprenant
- des moyens pour envoyer des signaux de parole mis à disposition des N autres abonnés, avec N>=2, dans N canaux de parole logiques (p.ex. S11, S12, S13) et des moyens (SFU) pour sélectionner M, avec M<N, canaux d'image logiques (p.ex. B11), ainsi que des moyens pour envoyer les signaux d'image par M abonnés dans les M canaux d'image (p.ex. B11).

15. Système de télécommunication mobile selon la revendication 14, **caractérisé en ce qu'**il est prévu, pour sélectionner les canaux d'image, un dispositif fonctionnel (SFU) doté d'un dispositif fonctionnel de sélection (AUF) pour le traitement des canaux de parole logiques (p.ex. S11, S12, S13) et doté d'un dispositif fonctionnel de commutation de canal d'image (BKUF) pour la commutation des canaux d'image.

16. Système de télécommunication mobile selon la revendication 15, **caractérisé en ce que** le dispositif fonctionnel de sélection (AUF) envoie au dispositif fonctionnel de commutation de canal d'image (BKUF) un message (MSGA) par lequel les signaux d'image de l'abonné actuellement en cours de conversation peuvent être commutés sur un canal d'image logique sortant (p.ex. B11).

17. Système de télécommunication mobile selon la revendication 14 ou 15, **caractérisé en ce que** par suite d'au moins une action utilisateur réalisée par l'abonné sur le terminal d'abonné mobile (MMS), le dispositif fonctionnel de sélection (AUF) ou le dispositif fonctionnel de commutation de canal d'image (BKUF) reçoit un signal de signalisation (MSAC) grâce auquel les signaux d'image d'un abonné déterminé ou d'un extrait d'image déterminé peuvent être commutés sur un canal d'image sortant (p.ex. B12).

18. Système de télécommunication mobile selon l'une des revendications 14 à 17, **caractérisé en ce que** les moyens de sélection des canaux d'image (p.ex. B11) sont agencés dans un sous-système radiotechnique (BSS) d'un système de télécommunication mobile, qui est relié par l'intermédiaire de l'interface radio (Al) au terminal d'abonné mobile (MMS) d'un abonné radio.

19. Système de télécommunication mobile selon l'une des revendications 14 à 17, **caractérisé en ce que** les moyens de sélection des canaux d'image sont agencés dans un sous-système de commutation (SSS) d'un système de télécommunication mobile, qui est relié par l'intermédiaire de l'interface radio (Al) au terminal d'abonné mobile (MMS) d'un abonné radio.

20. Système de télécommunication mobile selon la revendication 19, **caractérisé en ce que** le dispositif de commutation est configuré comme unité de contrôle de services (SCP) d'un système de télécommunication mobile supportant la structure d'un réseau intelligent.

21. Terminal d'abonné mobile (MMS) doté de dispositifs d'émission/réception radiotechniques pour le support de services multimédia par l'intermédiaire d'une interface radio (AI) depuis/vers un système de télécommunication mobile (UNW) doté de dispositifs d'émission/réception radiotechniques, comprenant
- des moyens (4) de mise à disposition de signaux de parole et de signaux d'image par un abonné mobile du service multimédia, qui sont émis par l'intermédiaire de l'interface radio (Al) par les dispositifs d'émission/réception, et comprenant
- des moyens (8) d'émission de signaux de parole mis à disposition par le système de télécommunication mobile (UNW) et reçus dans N, avec N>=2, canaux de parole logiques des N autres abonnés et des moyens (3) d'affichage de signaux d'image mis à disposition par le système de télécommunication mobile et transmis dans M, avec M<N, canaux d'image logiques sélectionnés de M abonnés.

22. Terminal d'abonné mobile selon la revendication 21, **caractérisé en ce que** l'appareil (MMS), pour activer une action utilisateur, comprend une ou plusieurs touches (5) d'un dispositif d'entrée (2) ou une surface de commande de type menu pour sélectionner un canal d'image prévu dans le système de télécommunication mobile pour la transmission des signaux d'image d'un abonné déterminé.

23. Terminal d'abonné mobile selon la revendication 21, **caractérisé en ce que** l'appareil (MMS), pour activer une action utilisateur, comprend un moyen d'entrée interactif pour sélectionner un canal d'image prévu dans le système de télécommunication mobile pour la transmission des signaux d'image d'un extrait d'image déterminé.
